Europäisches Patentamt

European Patent Office

Office européen des brevets

(11) Veröffentlichungsnummer: **0 450 455 A2**

(12) **EUROPÄISCHE PATENTANMELDUNG**

(21) Anmeldenummer: 91104707.4

(22) Anmeldetag: 26.03.91

(51) Int. Cl.⁵: **H01G 1/017**

(30) Priorität: 03.04.90 DE 4010753

(43) Veröffentlichungstag der Anmeldung:
09.10.91 Patentblatt 91/41

(84) Benannte Vertragsstaaten:
AT BE CH DE DK ES FR GB GR IT LI LU NL SE

(71) Anmelder: STEINER GMBH & Co. KG
Industriegebiet Jägersgrund
W-5927 Erndtebrück(DE)

(72) Erfinder: Steiner, Holger, Dipl.-Ing.
Baierbach 2
W-5927 Erndtebrück-Schameder(DE)

(74) Vertreter: Grosse, Dietrich, Dipl.-Ing. et al
Patentanwälte
HEMMERICH-MÜLLER-GROSSE-POLLMEIER--
MEY-VALENTIN Hammerstrasse 2
W-5900 Siegen 1(DE)

(54) **Folie mit einem im Vakuum aufgedampften, unterteilten Metallauftrag und aus der Folie erstellter selbstheilender Kondensator.**

(57) Um die im Falle eines Spannungsdurchschlages auftretenden Selbstheilungsströme selbstheilender Kondensatoren sowohl zu senken als auch zu begrenzen werden durch Schlitze 12 unterteilte, Elektroden bildende Metallaufträge der zum Wickeln benutzten Folien 1 empfohlen. Die Schlitze 12 werden hierbei so angeordnet, daß sie Flächenelemente 14 relativ geringer Größe nur soweit einschließen, daß zwischen diesen Flächenelementen noch Verbindungen in Form schmaler Brücken 15 bestehen bleiben. Damit wird erreicht, daß im Falle eines starken Stromdurchschlages die schmalen Brücken nur jeweils eines Flächenelementes ausgebrannt werden und der hierdurch bedingte Kapazitätsverlust gering bleibt.

Fig. 2

EP 0 450 455 A2

Die Erfindung betrifft eine Folie zum Herstellen von selbstheilenden Kondensatoren mit einem als Elektrode vorgesehenen, im Vakuum aufgedampften, durch Ausnehmungen unterteilten Metallauftrag, bei der vor dessen Aufdampfen in den auszunehmenden Bereichen ein abdampfender Stoff aufgetragen ist, sowie einen aus der Folie erstellten selbstheilenden Kondensator.

Bei der Herstellung "selbstheilender" Kondensatoren hat es sich gezeigt, daß nicht in jedem Falle die gewünschte Wirkung des Wegbrennens des aufgedampften Metallauftrages um Durchschlagstellen des Dielektrikums herum erfolgt; die sich infolge eines Durchschlages ergebenden Kurzschlußströme können hierzu nicht ausreichend sein, meistens jedoch übersteigen sie den zur "Heilung" erforderlichen Strom und können die Spannungsfestigkeit des Dielektrikums beeinträchtigende zusätzliche Erwärmungen sowie weitere Zerstörungen bewirken.

Um kurzzeitig oder länger andauernde erhebliche Überströme zu vermeiden, werden solchen Kondensatoren Schmelzsicherungen oder auch Abreißsicherungen zugeordnet. Bei den Abreißsicherungen geht man davon aus, daß im Falle überstarker Durchschläge auch eine Gasentwicklung auftritt, welche das, bspw. durch eingedrückte Sicken, elastisch gehaltene Kondensatorgehäuse derartig verformt, daß hierdurch mindestens eine der Zuleitungen zum Wickel aus diesem herausgezogen bzw. von diesem abgezogen wird. Nachteilig erweist sich hierbei, daß der bei einem Durchschlag im Kondensatorengehäuse auftretende Überdruck sich zwischen dem Wickel und dem die Abreißmechanik aufweisenden Gehäuseboden auswirken muß, um den gewünschten Erfolg zu erzielen. Andererseits wiederum sind die den Kondensator aufweisenden Behälter so stark auszuführen, daß, auch bei ölgefüllten Kondensatoren, ein Aufplatzen der Gehäuse sicher vermieden wird. Auch der Einsatz von Schmelzsicherungen erweist sich als problembehaftet, da diese wiederum einen hohen Auslösestrom bedingen, der selbst bei starken Durchschlägen üblicherweise nicht erreicht wird.

Als nachteilig erweist sich, daß zur Minimierung der Folgen hoher Kurzschluß- bzw. Ausheilungsströme die Durchschlagssicherheit des Dielektrikums nur zu einem sehr geringen Prozentsatz nutzbar ist, so daß sich räumlich große, ausgedehnte Kondensatoren ergeben, deren Dielektrikum nur mit einem geringen Bruchteil seiner eigentlichen Spannungsfestigkeit belastet ist.

Es ist bereits eine Anzahl von Vorschlägen gemacht, durch besondere Ausbildung des Metallauftrages höhere Belastbarkeiten und ein verbessertes Selbstheil-Verhalten zu erreichen. So wird nach der EP-A1-0 243 288 ein Metallauftrag vorgeschlagen, der in Längsrichtung der Folie durch sich über dessen wesentliche Breite erstreckende Schlitze unterteilt ist, der am anschlußseitigen Ende zur Erleichterung des Anschlusses verstärkt ausgeführt ist, und bei dem mindestens einer der beiden Kondensator-Beläge im Bereiche der Enden der unterteilenden Schlitze mit geringer Stärke ausgeführt ist. Damit soll erreicht werden, daß im Falle einer nicht einwandfreien Aufteilung die ja mit geringer Stärke ausgeführten Wurzelbereiche der gebildeten Querzungen des Metallauftrages durchbrennen und damit die gesamte betroffene Querzunge abgetrennt wird. Als nachteilig erweist es sich jedoch, daß ein mit so unterschiedlichen Stärken ausgeführter Metallauftrag schwierig auftragbar ist und die gewünschten Toleranzen leicht überschreitet, und unangenehm macht sich weiterhin bemerkbar, daß beim Durchbrennen eines Wurzelbereiches eine nicht unerhebliche Kapazitätsverminderung des Kondensators durch Ausfall jeweils einer kompletten Querzunge auftritt.

Einfacher ist es, den gesamten Metallauftrag mit geringer Stärke auszuführen, um durch damit ansteigenden Wiederstand Kurzschluß- und Ausheilströme zu begrenzen. Als nachteilig erweist sich jedoch das mit abnehmender Auftragsdicke steigende Risiko der Beschädigung des Auftrages, die durch mechanische Beanspruchungen ebenso bewirkt werden kann wie durch korrodierende Einflüsse, die bereits während der Verarbeitung oder während des Lagerns auftreten können.

Es ist auch schon vorgeschlagen worden, zusätzlich zu einer Unterteilung in Querzungen durch in Längsrichtung der Folie verlaufende Schlitze die Wurzelbereiche der Querzungen bis auf schmale Stege von der Anschluß-Metallisierung abschnüren, so daß auch bei einem mit gleichbleibender Dicke ausgeführten Metallauftrag die Möglichkeit des Ausbrennens der Anschlüsse der Querzungen sich ergibt. Diese Anordnung kann so betrachtet werden, als ob die Querzungen jeweils über eine durch die Verengungen des Metallauftrages gebildete Schmelzsicherung mit der Anschluß-Metallisierung verbunden seien. Als nachteilig erweist sich auch hier, daß im Falle einer Ausheilung jeweils eine ganze Querzunge und damit ein relativ großer Flächenanteil abgeschaltet werden und somit jeweils ein unangenehm hoher Kapazitäts-Verlust auftritt. Eine weitergehende Unterteilung in schmalere Querzungen mindert zwar die im Durchschlagsfall jeweils auftretenden Kapazitätsverluste, die hierbei auftretende erhöhte Anzahl der Querschlitze jedoch reduziert die mit der Fläche des Dielektrikums erreichbare Kapazität.

Unangenehm macht sich bei den üblicherweise nachträglich eingearbeiteten Schlitzen bemerkbar, daß beim elektrischen Ausbrennen, bspw. nach der DE-OS 24 15 409, oder beim mechanischen Einarbeiten der Schlitze nach der DE-AS 1 150 765, in den Schlitzen stets relativ unkontrollierbare Metallbereiche verbleiben, die durch verbleibende Metallspitzen relativ hohe lokale Feldstärken bedingen können.

Die Erfindung geht daher von der Aufgabe aus, eine Folie der in der Gattung des Patentanspruches 1 beschriebenen Art zur Herstellung von selbstheilenden Kondensatoren zu schaffen, deren Metallauftrag derart durch metallfreie Schlitze unterteilt ist, daß die zur sicheren Selbstheilung erforderlichen Ströme gesenkt und andererseits übergroße Entladungsströme begrenzt werden, ohne daß im Falle eines Durchschlages wesentliche Kapazitätsverluste aufzutreten vermögen, so daß die Spannungsbelastung des Dielektrikums steigerbar ist.

Gelöst wird diese Aufgabe durch die Merkmale des Patentanspruches 1. Durch die Ausgestaltung der Ausnehmungen als schmale Schlitze läßt sich der die Elektroden bildende Metallauftrag der Folie in Flächenelemente geringer Erstreckung aufteilen, so daß beim Ausfall eines solchen Flächenelementes auch nur ein relativ geringer Kapazitätsverlust auftritt. Die aufteilenden Schlitze enden vor jeweils Flächenelemente verbindenden Brücken, die so eng gewählt sind, daß sie beim Auftreten übergroßer Ausheilungsströme durchbrennen. Durch entsprechende Wahl der Anzahl dieser Brücken und deren Weiterführung von Flächenelement zu Flächenelement wird erreicht, daß nur am betroffenen Flächenelement selbst die Stromengen bildenden und damit als Schmelzsicherungen wirkenden Brücken zerstört werden, die übrigen Flächenelemente aber mit dem Anschlußbereich verbunden bleiben.

Als wesentlich hat es sich zur Herstellung definiert geformter, den Metallauftrag unterteilender schmaler Schlitze gezeigt, diese durch ein mittels einer gemusterten Auftragswalze vor dem Aufdampfen des Metallauftrages aufgebrachtes Maskierungsöl nach der US-PS 4 832 983 zu bewirken. Weiterbildende Merkmale sind den Unteransprüchen entnehmbar.

Im einzelnen wird die Erfindung anhand der Beschreibung von Ausführungsbeispielen in Verbindung mit diese darstellenden Zeichnungen erläutert. Es zeigen hierbei:

Figur 1    schematisch eine Anordnung zum Aufbringen eines lokal unterbrochenen Metallauftrages auf eine Folie,

Figur 2    einen Abschnitt einer mit der Anordnung nach Fig. 1 bedampften Folie, und deren Metallauftrag durch Schlitze derart unterteilt ist, daß zwischen den Flächenelementen geringer Größe stromleitende schmale Brücken verbleiben, und

Figur 3    bis Figur 6 Ausschnitte weiterer, mit der Anordnung nach Fig. 1 herstellbarer Folien mit unterteiltem Metallauftrag.

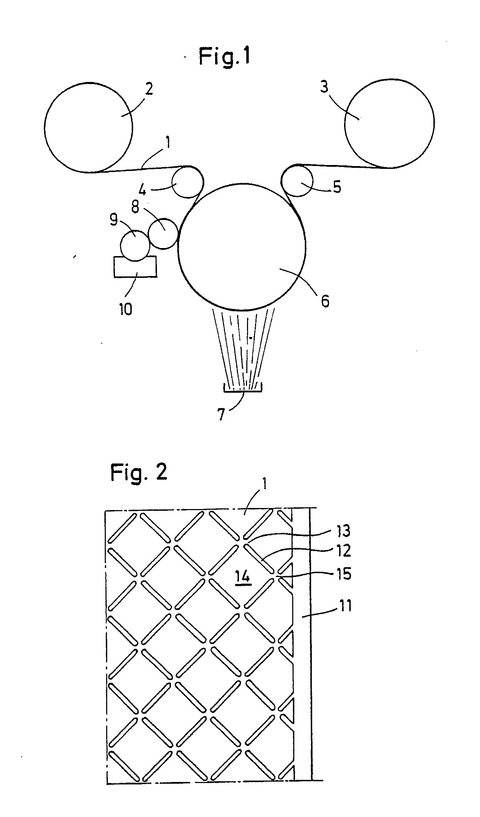

In Fig. 1 ist schematisch eine Anordnung dargestellt, mittels derer eine Folie, bspw. eine vorzugsweise doppelt gelegte Papierbahn, meist jedoch eine Kunststoffolie, bspw. aus Polypropylen oder Polyester, lokal begrenzt mit einem dünnen Metallauftrag versehen wird. Die Folie 1 wird hierbei von einer Vorratsrolle 2 abgezogen und von einer Aufnahmerolle 3 wieder aufgenommen. Die Folie ist zwischen der Vorratsrolle 2 und der Aufnahmerolle 3 über Umlenkrollen 4 und 5 um eine Kühlrolle 6 geführt. Der Kühlrolle 6 steht ein Dampferzeuger 7 gegenüber, der nach Erhitzen im Vakuum Metalldämpfe, bspw. Aluminium- oder Zinkdämpfe oder dergleichen, abzugeben vermag. Zusätzlich zu dieser an sich bekannten Verdampfungsanordnung ist eine an die Folie 1 angelegte Druckrolle 8 gezeigt, die vorzugsweise als weiche bzw. einen weichen Belag aufweisende Rolle ausgeführt ist, und deren Oberfläche das Muster der freizubleibenden Schlitze erhaben zeigt. Über die Dosiervorrichtung 10 und die Übertragungsrolle 9 werden die erhabenen Stellen des Mantels der Druckrolle 8 mit einem unter Wärmeeinfluß abdampfenden Stoff versehen, bspw. einem organischen oder anorganischen Öl.

Beim Durchlauf der Folie 1 durch die entlang des Umfanges der Kühlrolle 6 gelegene und dem Dampferzeuger 7 gegenüberstehende Bedampfungszone dampft von der Folie der aufgetragene Stoff, bspw. ein Öl, ab und verhindert damit in diesen Bereichen den Zutritt des vom Dampferzeuger 7 abgegebenen Metalldampfes und damit die Bildung eines Metallniederschlages, so daß entsprechend der Profilierung der Druckrolle 8 auf der Folie 1 ein metallfreies Muster entsteht. Damit können die spezifischen, für dieses Verfahren erforderlichen Vorrichtungen ohne weiteres und ohne Schwierigkeiten der bekannten Aufdampfungsvorrichtung beigefügt werden, so daß eine gemeinschaftliche Evakuierung und ein gemeinsames Arbeiten im Vakuum bzw. Hochvakuum in einem Durchlauf möglich sind.

Die mittels der Druckrolle hergestellten Muster lassen sich beliebig geformt und im wesentlichen ohne scharfe oder gar gezackte Kanten ausführen, so daß die metallfrei gebliebenen Bereiche klare und nicht strukturierte Kanten in der gewünschten Anordnung aufweisen. Das Herstellungsverfahren zeichnet sich auch dadurch aus, daß es keinerlei Beschränkungen bezüglich der aufzudampfenden Metallarten gibt, jede gewüschte Metallisierungsform vorgebbar ist und auch jede übliche Art der Dampferzeugung übernehmbar ist. Das Verfahren ist weiterhin für alle dielektrischen Materialien geeignet und gestattet den modifizierten Metallauftrag ohne Beschädigung oder Gefährdung der Folie.

Wie bereits ausgeführt, lassen sich derartige modifiziert metallisierte Folien zur Herstellung von selbstheilenden Kondensatorn benutzen. Gemäß der Erfindung ist die Metallisierung der Folien derart ausgebildet, daß nur relativ kleine Flächenelemente von gestreckten oder abgerundeten Schlitzen fast umschlossen werden und durch zwischen den Enden der Schlitze verbliebene relativ schmale Brücken mit benachbarten Flächenelementen verbunden sind. Die Flächenelemente können bspw. eine gegenüber den bekannten Zungen um eine Zehnerpotenz oder mehr verringerte Fläche aufweisen. Damit werden einerseits überhohe Feldstärken ebenso vermieden wie während des Selbstheilungsvorganges auftretende, die Spannungsfestigkeit des Dielektrikums, und andererseits bedingen durch die weitgehende Unterteilung ausgefallene Flächenelemente einen nur geringen Kapazitätsabfall.

In Fig. 2 ist ein mittels der Druckrolle 8 bewirkbares Metallisierungsmuster dargestellt, das an selbstheilende Kondensatoren zu stellenden Forderungen zu genügen vermag. Bei der Anwendung eines solchen Musters läßt sich die spezifische dielektrische Belastung praktisch auf das Doppelte des bisher Üblichen steigern, so daß bei vorgegebenem Dielektrikum ein mit dieser Bemusterung ausgeführter selbstheilender Kondensator praktisch mit der doppelten Spannung betrieben werden kann als bisher üblich.

In der Fig. 2 ist die Aufsicht auf einen Abschnitt einer Kondensatorfolie 1 dargestellt, die mit einer Anordnung vergleichbar der Fig. 1 mit einem Metallauftrag versehen wurde. Ursprünglich mit Öl bedruckt und daher ohne Metallauftrag verblieben sind die in Form langer, schmaler Rechtecke ausgebildeten Schlitze 12, deren Enden 13 halbkreisförmig auslaufen. Der Metallauftrag wird durch die verstärkt ausgeführte Anschlußleiste 11 und im wesentlichen durch die relativ kleinen Flächenelemente 14 gebildet, die rautenförmig angeordnet sind, und deren Ecken jeweils über Brücken 15 mit benachbarten Flächenelementen verbunden sind. Kommt es hier zu einem Durchschlag mit überstarken Strömen, so belasten diese die vier Brücken 15 des betroffenen Flächenelementes 14 und brennen diese durch, so daß das Flächenelement vom Metallauftrag abgetrennt wird. Die über die Brücken erreichbaren benachbarten Flächenelemente nehmen hierbei jeweils nur einen Teilstrom auf und geben ihn über eine gleiche Anzahl von Brücken weiter, die somit nur mit einem Teil des jeweils eine Brücke zerstörenden Stromes belastet sind und unversehrt bleiben. So werden nur diese Brücken eines einzigen Flächenelementes unterbrochen, und nur dieses eine Flächenelement geringer Größe ist ausgeschaltet. Durch den vorherigen Ölauftrag wird erreicht, daß innerhalb der schmalen Schlitze 12 bei unverletzter Folie jede Metallisierung derselben fehlt, und durch die im wesentlichen gestreckte Form ihrer Flanken in Verbindung mit ihren halbkreisförmigen Enden werden im Gebrauche des Kondensators Spitzenfeldstärken weitgehend unterbunden.

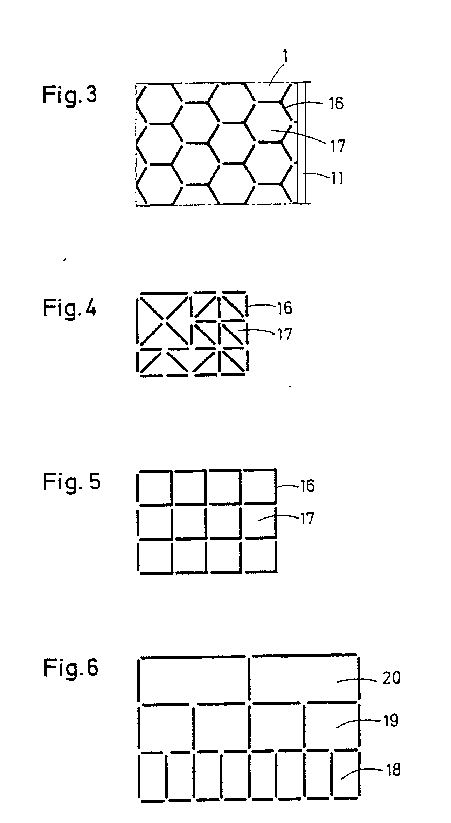

Die Form des Metallauftrages einer für die Herstellung von Kondensatoren benutzten Folien ist jedoch nicht auf Anordnungen nach Fig. 2 beschränkt. Als wesentlich erweist sich, daß nach Möglichkeit scharfe Ecken vermieden werden sollen und Flächenelemente geringer Abmessungen geschaffen werden, die durch mindestens eine, vorteilhaft mehrere Brücken mit benachbarten Flächenelementen verbunden sind. Nach Fig. 3 können z.B. wabenartige Strukturen durch metallfrei gebliebene Schlitze 16 gebildet werden, wobei jedes Flächenelement 17 als regelmäßiges Sechseck ausgebildet ist und von sechs gestreckten metallfreien Schlitzen umgeben sein kann, so daß das Flächenelement durch sechs Brücken an benachbarte angeschlossen ist. Es besteht aber auch bspw. die Möglichkeit, die Schlitze, wie in Fig. 3 dargestellt, als drei gestreckte, jeweils um 120° verschränkte und in einem Punkt sternförmig zusammenlaufende Schlitze 16 auszubilden, so daß jedes der Flächenelemente 17 über drei Brücken 18 mit benachbarten Flächenelementen in Verbindung steht.

Desgleichen ist es möglich, Flächenelemente 17 in Form von Dreiecken vorzusehen, wie dies in unterschiedlichen Aufteilungen in Fig. 4 dargestellt ist, oder gemäß Fig. 5 in Form von Quadraten oder Rechtecken. Nach Fig. 6 besteht auch die Möglichkeit, die Größe der Elemente in Querrichtung der Folie zu ändern, so daß bspw. fein unterteilte Flächenelemente an der Anschlußleiste der Folie zur Verfügung stehen und in Querrichtung der Folie dann größere Flächenelemente folgen, während an der gegenüberliegenden Querseite Flächenelemente weiterhin gesteigerter Länge zur Verfügung stehen. Hierbei ist die Erfindung weder auf eine Abstufung von drei Längsstufen mit Flächenelementen unterschiedlicher Länge beschränkt noch auf den Umstand, daß die feinunterteilten Flächenbereiche 18 an die Anschlußleiste der Folie 1 anschließen. Ferner lassen sich die Flächenelemente auch außerhalb der gegebenen Beispiele ausführen; wesentlich ist, daß die Flächenelemente jeweils geringe Größen zeigen und durch metallfrei gebliebene Schlitze so gegeneinander abgetrennt sind, daß je Flächenelement mindestens eine, vorteilhaft jedoch zwei oder drei Brücken zu benachbarten Flächenelementen vorgesehen sind. In jedem dieser Fälle ergibt sich eine Optimierung der Materialausnutzung beim Aufbau selbstheilender Kondensatoren bei gleichzeitiger Verbesserung der gegebenen Sicherheit, so daß, insbesondere wenn die Metallisierung mit einer Zink-Alu-Legierung nach EU-PS 88 137 erfolgt, die aus der Folie erstellten Kondensatoren mit gegenüber bekannten, mit dem gleichen Dielektrikum versehen mit verdoppelter Spannung betreibbar sind. Auch Überlastungen bis zum Totalausfall sind möglich; diese erfolgen harmlos durch nacheinander bewirktes Abschalten von Flächenelementen durch Ausbrennen von Brücken, ohne daß Überlastungen, insbesondere Druckbelastungen, auftraten, welche den Kondensatorbecher sichtbar deformierten.

## Patentansprüche

1. Folie zum Herstellen von selbstheilenden Kondensatoren mit einem als Elektrode vorgesehenen, im Vakuum aufgedampften, durch Ausnehmungen unterteilten Metallauftrag, bei der in den Flächenbereichen der zu erstellenden Ausnehmungen vor dem Aufdampfen des Metallbelages ein abdampfender Stoff aufgetragen ist,
**dadurch gekennzeichnet,**
daß die Ausnehmungen als schmale, unterbrochene und an ihren freien Enden abgerundet verlaufende Schlitze (12, 16) ausgeführt sind, welche den Metallauftrag in Flächenelemente (14, 17 bis 20) geringer Erstreckung aufteilen, und deren freie Enden die Flächenelemente leitend verbindende Brücken (15) geringer Breite einschließen.

2. Folie nach Anspruch 1,
**dadurch gekennzeichnet,**
daß jedes Flächenelement (14, 17 bis 20) durch mindestens zwei Brücken (15) an benachbarte Flächenelemente angeschlossen ist.

3. Folie nach Anspruch 1 oder 2,
**gekennzeichnet durch**
gekrümmt verlaufende, gestreckt verlaufende und/oder sich verzweigende streifenförmige Schlitze (12, 16).

4. Folie nach einem der Ansprüche 1 bis 3,
**gekennzeichnet durch**
einfach oder mehrfach abgewinkelte streifenförmige Schlitze (16).

5. Folie nach einem der Ansprüche 1 bis 4,
**gekennzeichnet durch**
Flächenelemente (17 bis 20) ungleicher Form und/oder Größe.

6. Folie nach einem der Ansprüche 1 bis 5,
**dadurch gekennzeichnet,**
daß sie beidseitig mit je einem einer Kondensatorelektrode entsprechenden Metallauftrag versehen ist.

7. Verfahren zur Herstellung einer Folie nach einem der Ansprüche 1 bis 6,
**dadurch gekennzeichnet,**
daß der aufgetragene, abdampfende Stoff auf den Stempel bzw. die Druckrolle (8) mittels einer Übertragungsrolle (9) über eine Dosiervorrichtung (10) auftragbar ist.

8. Selbstheilender Kondensator,
**dadurch gekennzeichnet,**
daß er aus einer Folie (1) nach einem der Ansprüche 1 bis 7 erstellt ist.

Fig.1

Fig. 2

Fig. 3

Fig. 4

Fig. 5

Fig. 6